# EUROPEAN PATENT APPLICATION

(11) **EP 2 428 392 A1**
(43) Date of publication of application: **14.03.2012**
(21) Application number: 10772053.4
(22) Date of filing: 30.03.2010
(51) Int. Cl.: B60N 2/005

(54) **METHOD FOR OBTAINING A READY-TO-FIT SEAT MODULE AND MODULE OBTAINED**

(30) Priority: 07.05.2009 ES 200930138
(71) Applicant: Centro Tecnológico De Grupo Copo, S.L.U., 36416 Puxeiros (MOS) Pontevedra (ES)
(72) Inventor: GONZÁLEZ PÉREZ, Arturo, E-36416 Puxeiros (MOS) Pontevedra (ES); RODRÍGUEZ COELLO, Sixto, E-36416 Puxeiros (MOS) Pontevedra (ES); LORENZO BUJAN, Noelia, E-36416 Puxeiros (MOS) Pontevedra (ES); PLAZA ÁLVAREZ, Alejandro, E-36416 Puxeiros (MOS) Pontevedra (ES)
(74) Representative: Carvajal y Urquijo, Isabel
(86) International application number: PCT/ES2010/070193
(87) International publication number: WO 2010/128186

(57) **Abstract**

Method for obtaining a ready-to-fit seat module, and module obtained. The seat module, comprising a block of foam (3),a textile cover (4), and a metal seat part (7) with a support function, has as fundamental feature an insert made up of a rigid or semi-rigid base (5) forming a one-piece body (1) with the block of foam (3) and the cover (4) in such a way that this one-piece body (1) is mounted on the metal seat part(7) to constitute a seat module that is ready to fit to.the bodywork of a vehicle, all without the need for coupling elements between the foam block (3) and cover (4), it being possible for the metal seat part and the rigid or semi-rigid block to be standard for the various versions of the same model of vehicle, the block of foam (3) varying for each version of said vehicle model.

## Description

### Object of the Invention

As reflected by the title of this specification, the present invention relates to a method for obtaining a seat module, specifically a seat module for an automobile which is ready to be fitted into the bodywork of the automobile. The method is based on reducing the determined component attachment phases involved to produce the seat module itself.

The seat module obtained by means of the aforementioned method comprising a foam core, a textile cover, an insert or rigid base and a support or metal seat part forming a module which is supplied to an automobile manufacturer so that it is fitted directly into the bodywork of the vehicle itself, is also the object of the invention.

### Background of the Invention

Today, an automobile seat comprises two fundamental parts or components and a textile cover, one of the parts being a flexible block of foam on which the textile cover is fitted, while the other part is formed by what is known in the sector as a metal seat part which is none other than a support frame on which the block of foam with the cover is fitted.

The textile cover includes inserts which are complemented with couplings to attach them to other inserts provided for such purpose in the block of foam forming an assembly determined by the block of foam and the cover.

The cover further includes devices for coupling it to the metal seat part, the latter being provided with anchoring and safety elements.

Nevertheless, it is known that the cover and the block of foam form a single assembly without the coupling element of both components, being able to have determined and varied inserts such as presence detectors, heaters, airbag modules, etc., or not.

The different components involved in the assembly of a seat module are all manufactured by different manufacturers such that a single company receives all the components separately for assembling them and producing the seat module as a single assembly which is delivered to the manufacturer of the automobile so that it is fitted into the bodywork of the latter.

Evidently and as mentioned above the block of foam with the cover can form a single assembly for its attachment on the metal seat part, although a company that receives those components separately from different manufacturers for assembling them in said company is always needed.

### Description of the Invention

The method of the invention has been conceived to solve the described problem and to achieve new performances and advantages both from the manufacturing and assembling point of view and from the economic costs point of view.

Thus, the method of the invention is fundamentally based on the single assembly formed by the flexible block of foam of a seat and the corresponding textile cover incorporating an insert formed by a rigid or semi-rigid base thereby determining a one-piece body for its attachment to the corresponding metal seat part.

In other words, it aims to produce a seat module in which the conventional couplings between the cover, block of foam and metal seat part are eliminated, in addition to allowing the latter to be lighter since part of the rigidity is provided by the insert forming the rigid base.

The seat module obtained comprises the block of foam with the textile cover, the rigid base as an insert and the metal seat part wherein the fitter receives the first three components forming a one-piece body and the metal seat part separately, simply having to attach or assemble the latter with the mentioned assembly or one-piece body, the seat module being ready to be fitted into the bodywork of the vehicle.

Based on the mentioned features, in addition to the aforementioned advantages of being able to produce a lighter metal seat part and therefore a metal seat part with lower weight and cost, the advantages of being able to standardize said metal seat part for all the versions of an automobile model must be added, the assembly formed by the cover, the foam and the rigid or semi-rigid insert conferring a variety of versions.

Likewise, the logistics, the product or seat module itself and the force required in the phases of the process for obtaining and/or assembling the components are improved with a time saving and therefore a final cost saving.

Definitively, by means of the seat module obtained according to the invention, the most outstanding performances and advantages can be summarized below:
- Incorporation of the rigid base as an insert, allowing saving part of the metal seat structure with the consequent saving in weight and cost.
- The seat can be provided with sufficient rigidity to confer passive safety features (such as the antisubmarine function) by virtue of the varied geometry that the insert forming the rigid base plus the side support can have.
- More variants having the features making up the perceived comfort of a seat can be combined.
- The bottom or base can be provided with sufficient rigidity to allow coupling the textile cover of the seat.
- The seat can be provided with a rigid or semi-rigid base common for various versions of the same vehicle, being able to change the flexible foam adapting it to the requirements of the different variants.
- The incorporation of the rigid or semi-rigid base allows securely attaching the textile cover, a securely attached assembly being formed between the foam and the textile cover.
- The one-piece body determined by the block of foam, the cover and the rigid base is sufficiently secure to ensure and facilitate the attachment of said assembly to the corresponding metal seat part, facilitating the fitting by means of fast fitting mechanisms.
- By means of the composition of the different materials forming the assembly (foam and base), a wide variety and options of final comfort features of the assembly can be offered, allowing obtaining a seat assembly with different comfort requirements, geometric requirements, etc., maintaining a common base to thus enable standardizing the metal seat part.

### Brief Description of the Drawings

To complement the description which will be made below and for the purpose of aiding to better understand the features of the invention, a set of drawings based on which the innovations and advantages of the method and seat module obtained according to the object of the invention will be better understood is attached to the present specification.
Figure 1 shows a cross-section view of an unfitted seat module, the assembly or one-piece body formed by the block of foam, the cover and the rigid base being seen on one hand and the metal seat part on the other.
Figure 2 shows a cross-section view of the seat module fitted and produced according to the object of the invention.

### Description of a Preferred Embodiment

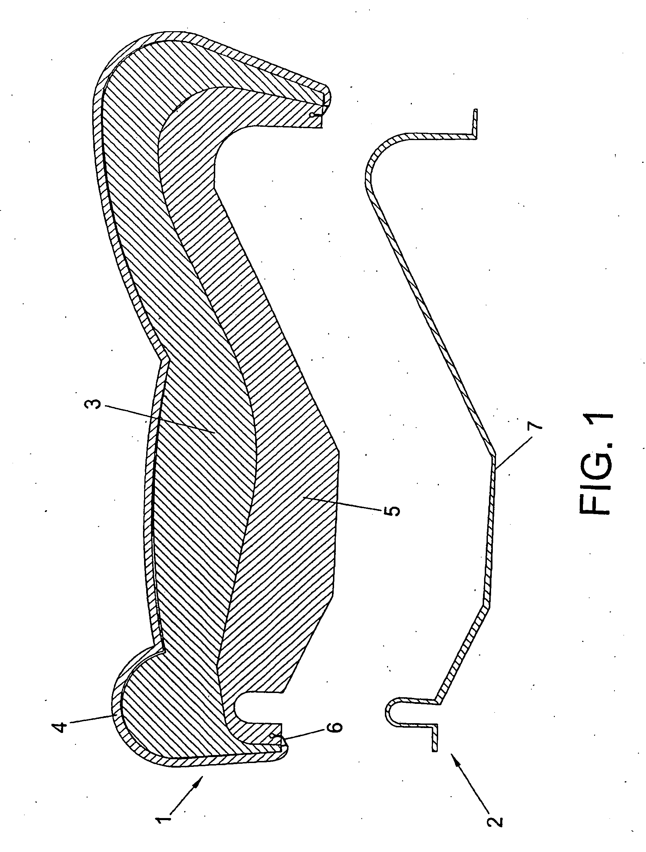

As can be seen in the mentioned drawings, the seat module comprises two parts 1 and 2 intended to be attached to one another such that part 1 forms a one-piece body determined by a flexible block of foam 3, a textile cover 4 and an insert or rigid base 5 on which the cover 4 fastens through suitable elements 6 as seen in Figure 1, forming the mentioned one-piece body.

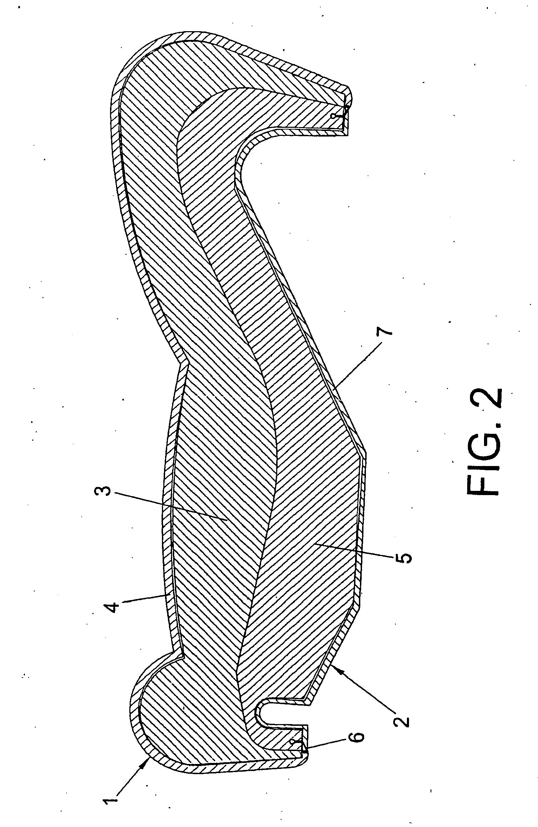

Part 2 or metal seat part forms the support base the geometry of which will correspond with the geometry offered by the bottom of the rigid base 5 since this metal seat part will be complementarily assembled to the bottom part of the rigid base 5 to form the seat module depicted in Figure 2, which seat module will be assembled by the same company intended for such purpose, receiving on one hand the metal seat part 7 and on the other hand the one-piece body 1, assembling those two parts and thus being delivered to the vehicle manufacturer for fitting that seat module into the bodywork of the vehicle.

## Claims

1. A method for obtaining a ready-to-fit seat module, **characterized in that** it comprises the following operative phases:
- forming a one-piece body by means of an insert of a rigid base on a flexible block of foam with a textile cover;
- attaching said one-piece body to a metal seat part functioning as a support to produce a seat module suitable for its installation and fitting in the bodywork of an automobile.

2. The seat module being provided for its application in an automobile and obtained according to the method of claim 1, **characterized in that** it is formed by means of attaching and assembling to one another a one-piece body (1) determined by a block of foam (3), a textile cover (4) and a rigid base (5) and a metal seat part (7) functioning as a support on which that one-piece body (1) is assembled through the rigid base (5).
